(19) Europäisches Patentamt
European Patent Office
Office européen des brevets

(11) Numéro de publication: **0 141 765**
**B1**

(12) **FASCICULE DE BREVET EUROPÉEN**

(45) Date de publication du fascicule du brevet: **29.06.88**

(51) Int. Cl.⁴: **C 08 G 73/12**

(21) Numéro de dépôt: **84420181.4**

(22) Date de dépôt: **24.10.84**

(54) **Compositions thermoduricissables à base de prépolymère à groupements imides stables au stockage et procédé de préparation.**

(30) Priorité: **25.10.83 FR 8317218**

(43) Date de publication de la demande: **15.05.85 Bulletin 85/20**

(45) Mention de la délivrance du brevet: **29.06.88 Bulletin 88/26**

(84) Etats contractants désignés: **BE CH DE FR GB IT LI LU NL**

(56) Documents cité: **EP-A-0 022 049**
**US-A-3 763 081**

(73) Titulaire: **RHONE- POULENC CHIMIE, 25, quai Paul Doumer, F-92408 Courbevoie Cédex (FR)**

(72) Inventeur: **Dien, René, 39, Avenue Gilbert Fabre, F-69390 Millery (FR)**
Inventeur: **Poulain, Guy, 5, rue du Renard, F-93460 Gournay- Sur- Marne (FR)**

(74) Mandataire: **Trolliet, Maurice, RHONE- POULENC INTERSERVICES Service Brevets Chimie Centre de Recherches de Saint- Fons B.P. 62, F-69192 Saint- Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 141 765 B1**

LIBER, STOCKHOLM 1988

**Description**

La présente invention a pour objet des compositions durcissables à base de prépolymeres à groupements imides et siloxaniqes et de divers adjuvants permettant l'obtention de compositions stables au stockage, filmogènes à des températures crises entre 40 et 90° C, collantes à température ambiante et souples.

De très nombreuses compositions ont été décrites dans la littérature présentant chacune des avantages et des inconvénients.

Dans le brevet francs 2 460 308 on a décrit des compositions thermodurcissables obtenues à partir de bis-maléimides et de silanes hydroxylés. Ces compositions ne présentent pas de propriétés de souplesse suffisantes pour les applications envisagées. De plus en couche mince, elles ne présentent pas de collant.

Il a maintenant été trouvé des compositions stables au stockage filmogènes à des températures comprises entre 40 et 90° C et de préférence entre 60 et 80° C, collantes à température ambiante et souples.

Par composition stable au stockage on entend une composition qui reste homogène (non cristallisation d'un constituant) et qui n'évolue pas dans le temps.

Par composition filmogène on entend une composition qui est fluide entre 40 et 90° C et peut-être déposée par enduction ou autre méthode classique de dépôt sur un tissu ou un non tissé, un matelas de fibres, un papier transfert, les fibres constituant ces différents supports étant recouvertes de façon continue soit directement soit après transfert.

Par composition collante à température ambiante on entend une composition qui déposée sur le substrat et ramenée à température ambiante permet à ce substrat d'être positionné par simple pression et de tenir en contact dans n'importe quelle position.

Par composition souple on entend une composition qui déposée sur le substrat n'augmente pas la rigidité doit substrat, permettant à celui-ci d'épouser les formes des pièces à obtenir qui peuvent être par exemple des pièces de révolution comportant des parties convexes et concaves, avoir des arrondis et/ou des arêtes.

L'invention a plus précisément pour objet de nouvelles compositions thermodurcissables obtenues par réaction de :

A/ Un prépolymère obtenu par réaction entre 50° C et 300° C de :

a) un bis-imide choisi parmi ceux de formule:

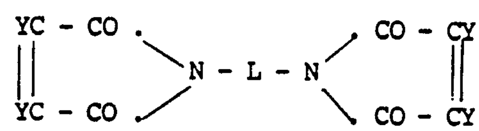

(1)

où Y représente H, $CH_3$ et le symbole L représente un radical divalent choisi dans le groupe constitué par les radicaux cyclonexylène, phénylène, tolylène ou diéthyl 2,5 tolylène et les radicaux de formule :

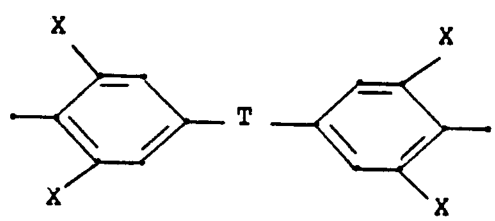

(2)

dans laquelle T représente un groupement

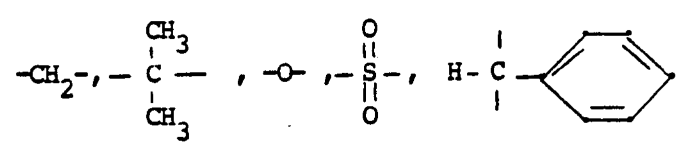

ou

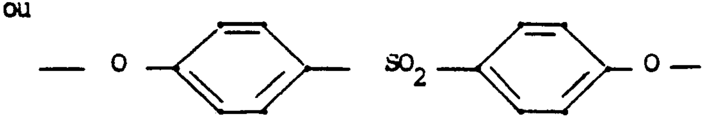

(3)

et X représente H, $CH_3$, isopropyl ; et

b) Un composé organosilicique comportant dans sa molécule au moins un groupement hydroxylé lié à un atome de silicium ;

et B/ un dérivé imidazole ;

lesdites compositions étant caractérisées par les points suivants :

. le réactif a) mis en oeuvre est un bis-imide de formule (1) ou une association de plusieurs bis-imides de formule (1) ou une association d'un bis-imide de formule (1) et de N-cyclohexylmaléimide ;

. le milieu de préparation de ces compositions contient en outre un composé C/ consistant en un triallylisocyanurate ou un di(méth)acrylate de diphényldiéthyoxysilane de formule générale :

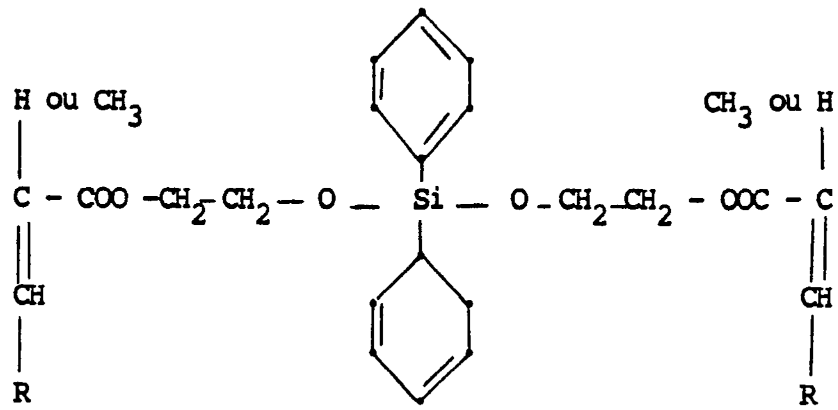 (4)

R étant un atome d'hydrogène, un radical méthyle ou éthyle ; et

. le composé C/ représente de 10 à 20 % en poids de la composition totale et le composé B/ représente de 0,05 à 3 % en poids de la composition totale.

Le bis-imide de formule (1) peut être choisi par exemple parmi :

les N,N'-cyclohexylène-bis-maléimides
les N,N'-métaphénylène-bis-maléimides
les N,N'-paraphénylène-bis-maléimides
les N,N'-4,4'-diphénylméthane-bis-maléimides
les N,N'-4,4'-diphényléther-bis-maléimides
les N,N'-4,4'-diphénylsulfone-bis-maléimides
les N,N'-tolylène-bis-maléimides
le N,N'-4,4-triphénylméthane-bis-maléimide
les N,N'-cyclohexyl-bis-phényl-maléimide
le 2,2-propane N,N'-bis-phénylmaléimide
le 1,1-cyclohexane N,N'-bis(maléimide 4-méthyl 3-phényl)
les diéthyl tolylène N,N'-bis-maléimides.

Ces bis-imides peuvent être préparés par application de la méthode décrite dans le brevet américain 2 444 536 pour la préparation de N-arylmaléimides.

Les composés organosiliciques hydroxylés qui entrent dans le cadre de l'invention sont des composés connus répondant à la formule générale (5) suivante :

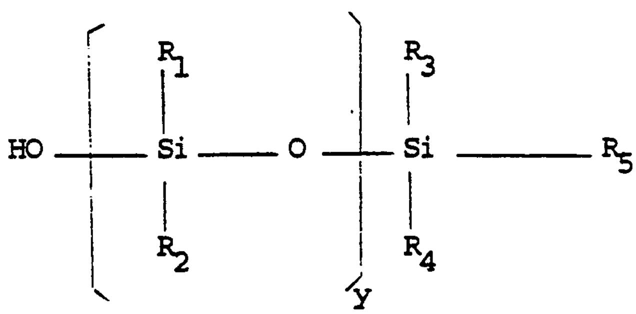 (5)

dans laguelle $R_1$, $R_2$, $R_3$, $R_4$ et $R_5$, identiques ou différents, représentent:

- un groupement hydroxyle ou un groupement du type $-OR_6$ dans laquelle $R_6$ peut être un radical alkyle, linéaire ou ramifié, ayant de 1 à 6 atomes de carbone ou un radical phényle ;
- un atome d'hydrogène ;
-un radical alkyle, linéaire ou ramifié, ayant de 1 à 6 atomes de carbone et pouvant être éventuellement substitué par un ou plusieurs atomes de chlore ou de fluor ou par un groupement -CN ;
-un radical alcényle, linéaire ou ramifié, ayant de 1 à 6 atomes de carbone;
- un radical phényle, éventuellement substitué par un ou plusieurs radicaux alkyle et/ou alcoryle ayant de 1 à 4 atomes de carbone, ou par un ou plusieurs atomes de chlore ; et y est un nombre entier ou fractionnaire, de 0 à 1000.

Pourun composé organosilicique défini de formule (5), y est en réalité toujours un nombre entier, mais comme il s'agit en l'occurence de composés à structure polymérique (lorsque y est supérieur à 1), on a rarement un seul composé, mais le plus souvent un mélange de composés de même structure chimique, qui diffèrent par le nombre d'unités récurrentes de leur molécule ; cela conduit à une valeur de moyenne y, qui

peut être entière ou fractionnaire.·

On peut caractériser les composés organosiliciques hydroxylés du type précité par le rapport du poids des groupements hydroxyle qu'ils possèdent au poids total de leur molécule.

Les composés organosiliciques, auxquels on fait appel de préférence pour exécuter la présente invention, sont les composés précités pour lesquels le rapport pondéral des groupements hydroxyle dans la molécule est au moins égal à 0,05 % et de préférence à 0,1 %.

Parmi les composés organosiliciques appartenant à ce groupe préféré, ceux qui conviennent tout particulièrement bien sont les composés de formule (5) dans laquelle :

-$R_2$, $R_2$, $R_3$ et $R_4$, identiques ou différents, représentent un radical alkyle, linéaire ou ramifié, ayant de 1 à 6 atomes de carbone ou un radical alcényle, linéaire ou ramifié, ayant de 1 à 6 atomes de carbone ou un radical phényle ;

- $R_5$ représente un groupement hydroxyle ;
- y est un nombre, entier ou fractionnaire, de 0 à 250.

Il s'agit donc de silane-diols lorsque y est égal à 0 ou bien de polysiloxane-diols lorsque y est différent de 0.

Pour leur préparation on peut se reporter à l'ouvrage de W.NOLL "Chemistry and Techology of Silicones" (traduction anglaise de l'Edition allemande de 1968) édité par Academic Press de New York.

Les composés organosiliciques qui conviennent tout particulièrement bien sont choisis dans le groupe constitué par :

- le diéthylsilane-diol
- le diphénylsilane-diol
- le méthylphénylsilane-diol
- le tétraméthyl-1,1,3,3 disiloxane-diol-1,3
- le diméthyl-1,1 diphényl-3,3 disiloxane-diol-1,3
- le diméthyl-1,3 diphényl-1,3 disiloxane-diol-1,3
- l'hexaméthyl-1,1,3,3,5,5 trisiloxane-diol-1,5
- l'octaméhyl-1,1,3,3,5,5,7,7 tétrasiloxane-diol-1,7
- le décaméthyl-1,1,3,3,5,5,7,7,9,9 pentasiloxane-diol-1,9
- le dodécaméthyl-1,1,3,3,5,5,7,7,9,9,11,11 hexasiloxane-diol-1,11
- le pentaméthyl-1,3,5,7,9 pentaphényl-1,3,5,7,9 pentasiloxane-diol-1,9

ainsi que leurs homologues supérieurs correspondants.

Les composés organosiliciques hydroxylés convenant tout particulièrement bien peuvent également être des mélanges de deux ou plusieurs des composés précités. Cc'est ainsi que l'on peut utiliser par comodité des huiles ou résines polysiloxaniques hydroxylées du commerce. Ce sont en particulier des huiles polyméthylpolysiloxaniques-α, ω dihydroxylées ayant de 0,2 à 0,3 % en poids de groupements hydroxyle (huile de Rhône-Poulenc 48 V 500), ou 10 à 12 % en poids de groupements hydroxyle (huile de Rhône-Poulenc 48 V 50) ou des huiles ou résines méthylphénylpolysiloxaniques-α, ω dihydroxylées ayant 4,5 % à 5 % en poids de groupements hydroxyle (huile 50606 de Rhône-Poulenc) ou de 7,5 à 8,5 % en poids de groupements hydroxyle (résine 50305 de Rhône-Poulenc) ; ces huiles ou résines du commerce sont données à titre d'exemple, mais il en existe d'autres pouvant convenir tout aussi bien.

Dans les prépolymères selon l'invention préparés à partir d'un réactif à groupements maléimides (1) et d'un composé organosilicique hydroxylé (5), on choisit les quantités de réactifs de manière à avoir un rapport pondéral :

$$\frac{\text{composé organosilicique hydroxylé}}{\text{réactif à groupements maléimides + composé organosilicique hydroxylé}}$$

compris entre 5 % et 80 %.

De manière habituelle, on utilise un rapport pondéral compris entre 10 % et 50 %.

En autre façon de définir les proportions relatives de réactif à groupements maléimides et de composé organosilicique hydroxylé consiste à indiquer le rapport entre le noce de fonctions hydroxyle du composé organosilicique et le nombre de groupements imide du réactif à groupements maléimides. Ce rapport est, en général, compris entre 0,003 et 10, et se situe, de manière préférentielle, entre 0,01 et 2.

Dans les copoositions selon l'invention, on utilise de préférence des quantités de réactif à groupements maléimides qui représentent de 60 à 90 % en poids du prépolymère A et des quantités de composé organosilicique hydroxylé qui représentent de 10 à 40 % en poids du prépolymère A.

L'ester acrylique de formule (4) est un ester acrylique ou méthacrylique qui peut être substitué ou non sur le radical acrylique par un radical méthyle ou éthyle.

On préférera le diméthacrylate de diphényldiéthoxysilane.

Le dérivé imidazole B/ répond à la formule générale

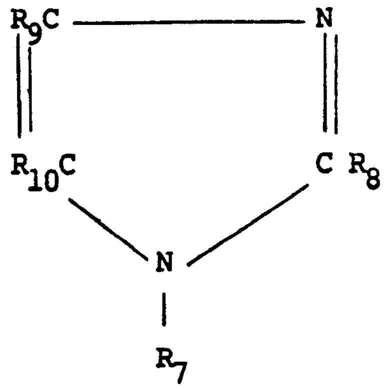

(6)

dans laquelle $R_7$, $R_8$, $R_9$ et $R_{10}$, identiques ou différents, représentent un atome d'hydrogène, un radical alkyle ou alcoxy ayant de 1 à 20 atomes de carbone, vinyle, phényle, nitro, $R_9$ pouvant former avec $R_{10}$ et les atomes de carbone auxquels sont liés ces radicaux un cycle unique comme par exemple un cycle benzénique.

Comme exemples spécifiques de dérivés imidazole, on peut citer, en particulier, l'imidazole ou glyoxaline, le méthyl-1 imidazole, le méthyle-2 imidazole, le dimethyl-1,2 imidazole, le vinyl-1 imidazole, le vinyl-1 méthyl-2 imidazole, le benzinimidazole.

Le dérivé imidazole est utilisé en quantités catalytiques. Selon la nature du dérivé imidazole et selon la vitesse de polymérisation souhaitée au stade de la mise en oeuvre, on utilise le dérivé imidazole à un taux compris comme indiqué ci-avant entre 0,05 et 3 % en poids par rapport à la composition totale.

Divers adjuvants peuvent être incorporés dans les compositions selon l'invention. Ces adjuvants habituellement utilisés et bien connus de l'homme de l'art peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quartz pulvérisé, le mica ou des microbilles de verre...

On peut aussi incorporer des adjuvants modifiant la structure physique du produit obtenu comme par exemple des agents porogènes ou des renforçants fibreux ; fibrilles de carbone, de polyimide, de polyamides aromatiques, whiskers, etc....

Le procédé de fabrication est tel que la résine (prépolymère) prête à l'emploi présente suffisamuent de souplesse et de collant en couche mince. En outre pour obtenir un matériau homogène après stratification, les réactions génératrices de compsés très volatils aux températures de cuisson doivent être peu importantes. Dans ce but, lorsque l'on part d'un silane diol il est souhaitable de réaliser d'abord la plus grande partie de la réaction d'oligomérisation donnant de l'eau comme sous-produit ; cette eau peut être éliminée plus facilement en cours de fabrication de la résine.

Tout d'abord on réalise un mélange intime du réactif à groupements maléimides et du composé organosilicique hydroxylé. Pour éviter une homopolymérisation prématurée des maléimides qui conduirait à une résine trop visqueuse, le mélange maléimide + silane hydroxylé est fondu en absence de catalyseur à une température au plus égale à la température de fusion du maléimide le plus difficile à liquéfier. Si l'on part d'un composé organosilicique riche en groupements hydroxylé susceptible de donner des enchaînements siloxaniques avec addition des OH sur les doubles liaisons maléimides, le mélange est maintenu fondu de façon à réaliser une partie de l'oligomérisation du silane diol. De préférence on chauffera ce composé à environ 150°C jusqu'à ce que 40 % environ des groupements hydroxyles initiaux aient disparu lors de l'oligomérisation de ce composé. On pourra, à titre de variante, réaliser cette oligomérisation avant introduction des composés à groupements maléimides.

Le catalyseur est ajouté au mélange bien agité de façon à permettre une dispersion rapide du catalyseur. Lorsque le catalyseur est particulièrement actif, pour éviter son encapsulation dans le réseau polymérique qu'il engendre, il est souhaitable de l'ajouter dans un diluant compatible avec le milieu réactionnel. On a trouvé qu'il pouvait être intéressant d'utiliser comme diluant tout ou partie du triallyisocyanurate mis en oeuvre dans la composition.

Le mélange est dégazé pour éliminer les volatils contre-indiqués pour la préparation des stratifiés. Le composé C/ est ajouté en dernier et la résine est coulée immédiatement après homogénéisation.

Les compositions peuvent être mises en oeuvre par des opérations de moulage ou d'imprégnation. Elles peuvent être utilisées pour la réalisation de revêtements, de collages, de stratifiés et matériaux composites renforcés. Le matériau de renforcement peut être, sous forme de nappes tissées ou non tissées, d'éléments unidirectionnels ou de fibres coupées naturelles ou synthétiques tels que les filaments ou fibres de verre, de bore, de carbone, de tungstène, de silicium, de polyamide-imides ou polyamides aromatiques. Les compositions présentent un intérêt tout particulier pour l'obtention d'articles intermédiaires préimprégnés sans solvant. L'imprégnation du matériau fibreux peut être effectuée par application des techniques usuelles telles que l'immersion, l'enduction au racle ou au rideau ou l'imprégnation par transfert. Le film transférable et les articles préimprégnés peuvent être utilisés directement ou bien être emmagasinés en vue d'un emploi

ultérieur; ils conservent remarquablement leurs propriétés au cours d'un stockage au froid entre 0 et 10° C.

Les matériaux imprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de préimprégnés sur une forme ou un support.

On effectue ensuite la réticulation dans les conditions technologiques habituelles relatives aux matériaux composites et en particulier à des températures comprises entre 100 et 300° C.

On peut utiliser aussi les préimprégnés comme renforts ou moyens de réparation de pièces détériorées.

Mais il est aussi possible de concevoir des pièces selon les techniques de l'enroulement filamentaire avec ou sans support, ou de l'injection moulage ou de la pultrusion.

On peut ainsi obtenir des produits conformés à haute résistance mécanique et thermique.

Les exemples suivants sont donnés à titre illustratif de l'invention :

**Exemple 1**

Dans un réacteur équipé d'un agitateur et d'un dispositif de dégazage et placé dans un bain d'huile thermostaté à 160° C, on introduit en 24 min un mélange de :

-420 g de N,N',4,4'-diphénylméthane-bis-maléimide,

- 280 g de N,N',2,4-tolylène-bis-maléimide et

- 300 g de diphénylsilanediol.

Le mélange est agité durant 26 min jusqu'à l'obtention d'une masse homogène. La masse réactionnelle est refroidie à 123° C. On introduit :

- 0,500 g d'imidazole sous forme d'une solution à 25 % dans la N-vinylpyrrolidone. Après 1 min d'agitation on dégaze sous pression réduite de 400 Pa pendant 4 min. Le mélange limpide est coulé à température ambiante, en couche mince. La résine s'écaille et n'a aucun collant. Maintenue fondue elle commence à cristalliser après 1h 45 à 90° C.

**Exemple 2**

On reproduit l'exemle précédent jusqu'à l'addition du catalyseur. On agite 1 min à 120°C sous pression atmosphérique. Puis 20 min sous pression réduite en refroidissant à 90° C. On ajoute alors :

- 109,5 g de diméthacrylate de diphényldiéthoxysilane commercialisé par RHONE-POULENC sous l'appellation SILANE 186. Après 2 mn d'homogénéisation la résine est coulée en film mince, déposée sur un papier siliconé (papier transfert pouvant permettre le report de la résine sur un tissu de verre, de carbone ou autre). La résine est souple et collante à température ambiante.

**Exemple 3**

Dans un patouillet de 10 l chauffé par double enveloppe et muni d'une agitation de type à ancre tournant à 85 T/min on charge :

- 824 g de diphénylsilanediol.

Après 5 min d'agitation, la température de la double enveloppe étant réglée à 160°C, on charge à vitesse uniforme en 35 min un mélange pulvérulent comprenant :

- 3 700 g de N,N'-4,4'-diphénylméthane-bis-maléimide,

- 2 467 g de 2,4-tolylène-bis-maléimide,

- 1 819 g de diphénylsilanediol.

En fin de charge le mélange pâteux est à une température de 136° C. Après 9 min d'agitation la température est de 158°C et le mélange est complètement liquide. Durant 20 min on laisse se réaliser une oligomérisation partielle du silanediol la température est maintenue à 152° C. On abaisse la température à 125° C en 13 min. La masse réactionnelle est alors dégazée pour éliminer l'eau formée. Cette opération dure 22 min à une température de 122° C ± 3° C la pression étant ramenée progressivement à 266 Pa.

On ajoute en 2 min une solution contenant:

- 6,17 g d'imidazole,

- 18,53 g de N-Vinylpyrrrolidone.

On remet sous vide durant 7 min à une pression de 660 Pa et à une température de 123° C. On ajoute 1 562,3 g de triallylisocyanurate et on homogénéise durant 2 min. Les volatils susceptibles d'être présents dans le triallylisocyanurate sont éliminés par mise sous vide durant 3 min sous une pression d'environ 660 Pa à une température de 108° C. La résine est soutirée.

La composition présente un temps de gel à :

150°C de 70 min
160°C de 47 min
170°C de 32 min
180°C de 20 min

On mesure sa viscosité fondue sur viscosimètre à mobile tournant avec un gradient de 104 $s^{-1}$. A 90°C elle est de 6,4 poises.

On mesure l'évolution de la viscosité à 90°C. En 2 heures elle passe à 8,5 poises. La résine reste parfaitement limpide.

Le taux de doubles liaisons maléimides dans la résine prête à l'emploi représente 92,3 % des doubles liaisons initialement chargées. L'obligomérisation du diphénylsilanediol peut être évaluée d'après la quantité d'eau piégée au cours des dégazages. Elle correspond à la transformation de 46,5 % des groupes hydroxyles en liaisons siloxaniques. Si on dépose une couche d'environ 13/100 mm sur un papier transfert, on constate que l'on a un depôt brillant, souple et collant. Conservé à température ambiante et à un degré d'humidité relative égal ou inférieur à 50 %, l'enduit est encore souple et collant après 12 jours.

**Exemple 4**

Avec la résine preparée à l'exemple 3 on imprégne par dépôt de la résine fondue un tissu de fibres de carbone à haute résistance. Ce tissu a une masse de 285 g/$m^2$; On dépose entre 230 et 250 g de résine par $m^2$.

Après enduction le préimprégné a été conservé à 5°C pendant 30 jours.

On découpe des échantillons de 30 x 30 cm. On empile 7 couches de préimprégnés (fils de chaîne et de trame étant disposés parallélement entre eux).

La polymérisation a été réalisée par la technique du sac à vide à 250°C sous une pression de $50.10^4$ Pa. Le composite subit enfin une post cuisson de 24 h à 250°C. Les plaques obtenues ont une épaisseur de 3,15 mm et un taux de résine d'environ 42 %.

On découpe dans ces plaques dos éprouvettes de 105 x 25 x 2,15 mm et on mesure à 20°C et à 240°C les caractéristiques mécaniques de ces éprouvettes. Pour les tests à 240°C le temps de montée en température est de 10 min. Il est suivi d'un palier à 240°C de 15 min.

On mesure la contrainte à la rupture en flexion ainsi que le module en flexion sur les éprouvettes placées sur des appuis inférieurs distants de 70 mm, la vitesse de déplacement du poinçon étant de 1mm/min.

On obtient les résultats suivants exprimés en MPa :

| Température de l'essai | Contrainte à la rupture | Module d'élasticité |
|---|---|---|
| 20°C | 680 | 53 400 |
| 240°C | 510 | 53 000 |

On constate que la contrainte à la rupture en flexion ne varie que très peu à 240°C par rapport à 20°C et que les modules d'élasticité ont sensiblement les mêmes à froid et à chaud.

**Revendications**

1. Compositions thermodurcissables obtenues par réaction de :

A/ Un prépolymère obtenu par réaction de :

a) un bis-imide choisi parmi ceux de formule

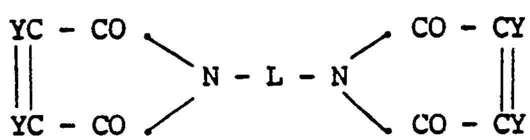

(1)

où Y représente H, $CH_3$ et le symbole L représente un radical divalent choisi dans le groupe constitué par les radicaux cyclohexylène, phénylène, tolylène ou diéthyl 2,5-tolylène et les radicaux de formule

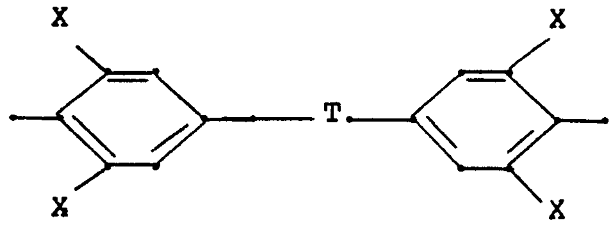 (2)

dans laquelle T représente un groupement :

$—CH_2—$ , 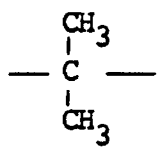 , —O— , 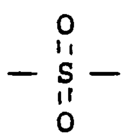 , 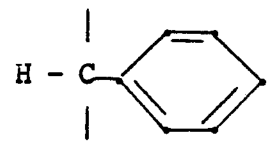

ou

ou

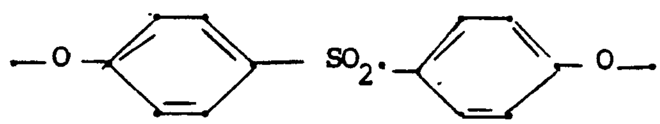 (3)

et x représente H, $CH_3$, isopropyl ; et

b) un composé organosilicique comportant dans sa molécule au moins un groupement hydroxylé lié à un atome de silicium ;

et B/ un dérivé imidazole ;

lesdites compositions étant caractérisées par les points suivants :

. le réactif a) mis en oeuvre est un bis-imide de formule (1) ou une association de plusieurs bis-imides de formules (1) ou une association d'un bis-imide de formule (1) et N-cyclohexylmaléimide ;

. le milieu de préparation de ces compositions contient en outre un composé C/ consistant en un triallylisocyanurate ou un di(méth)acrylate de diphényldiéthoxysilane de formule générale :

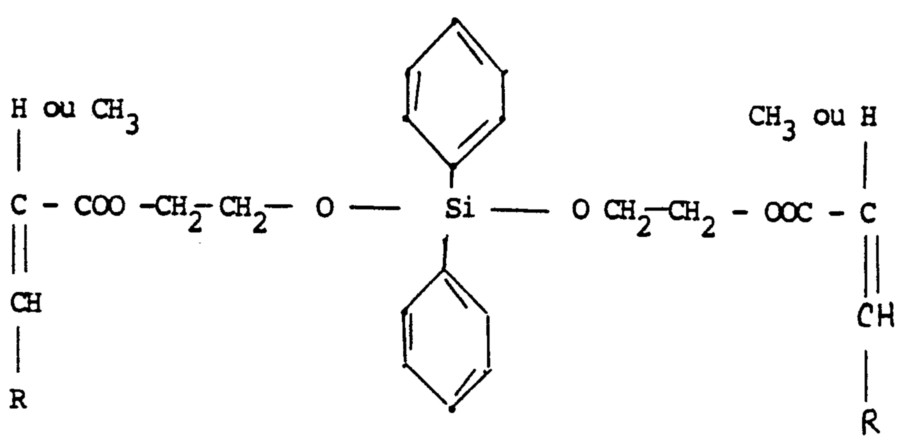 (4)

R étant un atome d'hydrogène, un radical méthyle ou éthyle ; et

. le composé C/ représente de 10 à 20 % en poids de la composition totale et le composé B/ représente de 0,05 à 3 % en poids de la composition totale.

2. Compositions selon la revendication 1 caractérisé en ce que le bis imide de formule (1) est le N,N'-4,4'-diphénylméthane-bis-maléimide et/ou le N,N'-2,4-tolylène-bis-maléimide.

3. Compositions selon la revendication 1 caractérisées en ce que le composé b) est le diphénylsilanediol.

4. Compositions selon la revendication 1 caractérisées en ce que le prépolymère A est constitué par 60 à 90 % en poids de réactif à groupments maléimides et de 10 à 40 % en poids de composé organosilicique.

5. Procédé de préparation de composition selon la revendication 1, caractérisé en ce que l'on réalise un mélange intime du réactif à groupements maléimides et du composé organosilicique hydroxylé, que l'on fond le mélange à une température au plus égale à la température de fusion du maléimide le plus difficile à liquéfier, puis que l'on ajoute le dérivé imidazole préalablement dissout dans un diluant, sous forte agitation, puis que l'on dégaze rapidement et enfin que l'on ajoute le triallylisocyanurate ou le di(méth)acrylate de diphényldiéthoxysilane et que l'on coule la résine immédiatement après homogénéisation.

6. Procédé selon la revendication 5, caractérisé en ce qu'antérieurement au mélange intime du réactif à groupements maléimides et du composé organosilicique hydroxylé, on chauffe ce dernier produit à 150°C environ jusqu'à ce que 40 % au moins des groupements hydroxylés initiaux aient disparu.

7. Procédé selon la revendication 5, caractérisé en ce que le composé imidazole est dissous dans le triallylisocyanurate.

8. Produits conformés obtenus à partir de compositions selon les revendications 1 à 4.

## Patentansprüche

1. Wärmehärtbare Zusammensetzungen, erhalten durch Reaktion von:
A) Einem Prepolymeren, erhalten durch Reaktion von:
a) Einem Bisimid, ausgewählt unter denjenigen der Formel:

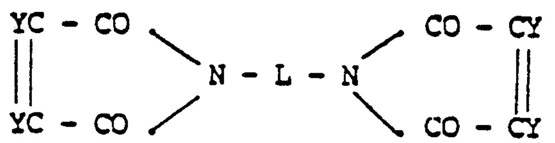 (1)

wobei Y bedeutet H, $CH_3$ und das Symbol L bedeutet einen zweiwertigen Rest, ausgewählt aus der Gruppe bestehend aus den Resten Cyclohexylen, Phenylen, Tolylen oder 2,5-Diethyltolylen und den Resten der Formel:

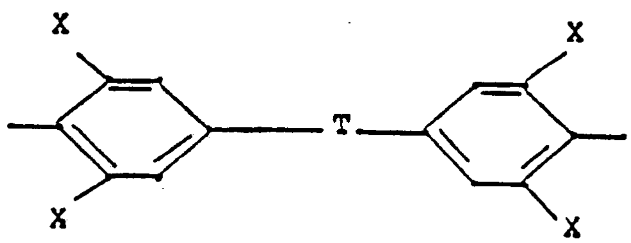 (2)

worin T eine Gruppierung:

$-CH_2-$ , 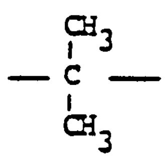 , $-O-$ , 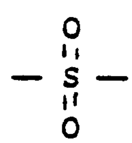 , 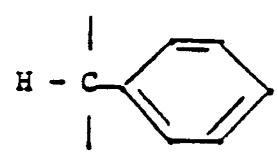

oder

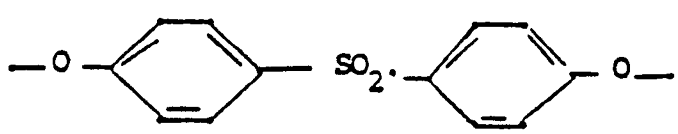 (3)

und X H, $CH_3$, Isopropyl bedeutet; und
b) einer Organosiliciumverbindung, die in ihrem Molekül wenigstens eine Hydroxylgruppe, gebunden an ein Siliciumatom, trägt;
und B) einem Imidazolderivat;
wobei diese Zusammensetzungen durch folgende Punkte gekennzeichnet sind:
· Das eingesetzte Reagens a) ist ein Bisimid der Formel (1) oder eine Assoziation von mehreren Bisimiden der Formel (1) oder eine Assoziation eines Bisimids der Formel (1) und N-Cyclohexylmaleinimid;
· das Herstellungsmilieu dieser Zusammensetzungen enthält außerdem eine Verbindung C), bestehend aus einem Triallylisocyanurat oder einem Di(meth)acrylat von Diphenyldiethoxysilan der allgemeinen Formel:

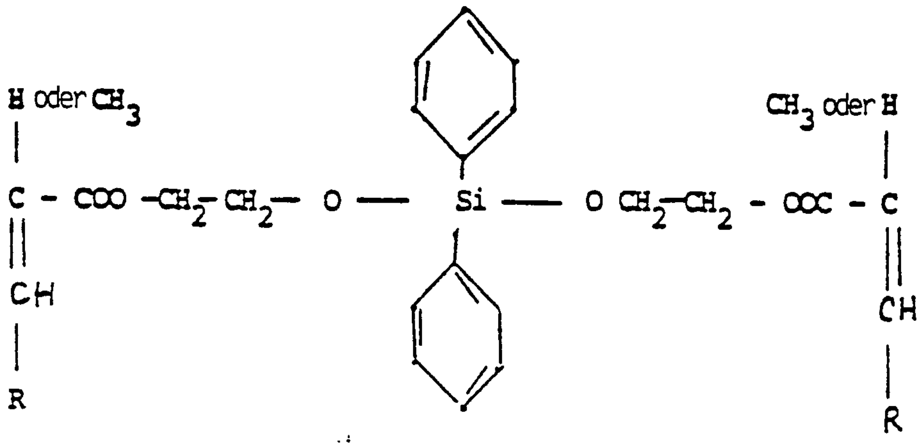

(4)

wobei R ein Wasserstoffatom, ein Methyl- oder Ethylrest ist; und
· die Verbindung C) stellt 10 bis 20 Gew.-% der Gesamtzusammensetzung dar und die Verbindung B) stellt 0,05 bis 3 Gew.-% der Gesamtzusammensetzung dar.

2. Zusammensetzungen gemäß Anspruch 1, dadurch gekennzeichnet, daß das Bisimid der Formel (1) das N,N'-4,4'-Diphenylmethanbismaleinimid und/oder das N,N'-2,4-Tolylenbismaleimid ist.

3. Zusammensetzungen gemäß Anspruch 1, dadurch gekennzeichnet, daß die Verbindung b) Diphenylsilandiol ist.

4. Zusammensetzungen gemäß Anspruch 1, dadurch gekennzeichnet, daß das Prepolymere A aus 60 bis 90 Gew.-% der Reaktionskomponente mit Maleimidgruppen und aus 10 bis 40 Gew.-% Organosiliciumverbindung besteht.

5. Verfahren zur Herstellung der Zusammensetzung gemäß Anspruch 1, dadurch gekennzeichnet, daß man ein inniges Gemisch der Reaktionskomponente mit Maleimidgruppen und der hydroxylierten Organosiliciumverbindung herstellt, daß man das Gemisch bei einer Temperatur höchstens gleich der Schmelztemperatur des Maleimids, das am schwersten zu verflüssigen ist, schmilzt, daß man dann das vorher in einem Verdünnungsmittel gelöste Imidazolderivat unter starkem Rühren zugibt, daß man dann rasch entgast und daß man schließlich das Triallylisocyanurat oder das Di(meth)acrylat des Diphenyldiethoxysilans zusetzt und daß man das Harz unmittelbar nach der Homogenisierung gießt.

6. Verfahren gemäß Anspruch 5, dadurch gekennzeichnet, daß man vor der innigen Mischung der Reaktionskomponente mit Maleimidgruppen und der hydroxylierten Organosiliciumverbindung dieses letztere Produkt auf etwa 150° C erhitzt, bis mindestens 40 % der anfänglichen Hydroxylgruppen verschwunden sind.

7. Verfahren gemäß Anspruch 5, dadurch gekennzeichnet, daß die Imidazolverbindung in dem Triallylisocyanurat gelöst wird.

8. Geformte Produkte, erhalten aus den Zusammensetzungen gemäß den Ansprüchen 1 bis 4.

## Claims

1. Thermosetting compositions obtained by reaction of:
A/ A prepolymer obtained by reaction of:
a) a bisimide chosen from those of formula:

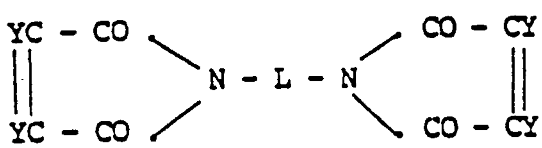

(1)

where Y denotes H, $CH_3$ and the symbol L denotes a divalent radical chosen from the group formed by the cyclohexylene, phenylene, tolylene or 2,5-diethyltolylene radicals, and the radicals of formula:

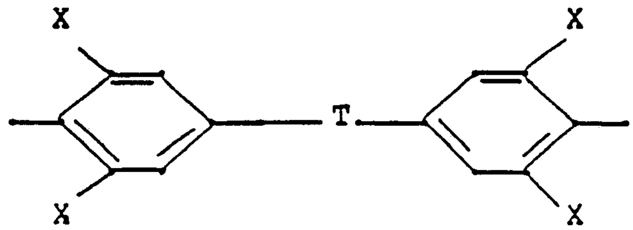

(2)

in which T denotes a group:

$-CH_2-$ , 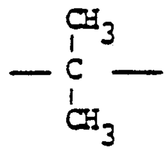 , $-O-$ , 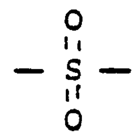 , 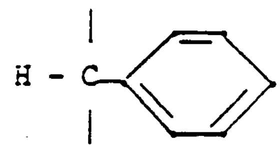

or

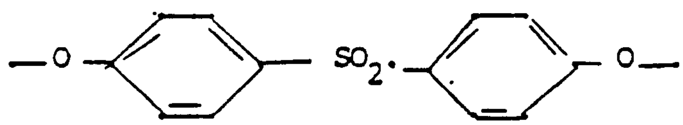

(3)

and X denotes H, $CH_3$ or isopropyl, and

b) an organosilicon compound incorporating in its molecule at least one hydroxyl group linked to a silicon atom,

and B/ an imidazole derivative,

the said compositions being characterized by the following points:

the reactant a) employed is a bisimide of formula (1) or a combination of several bisimides of formulae (1) or a combination of a bisimide of formula (1) and N-cyclohexylmaleimide,

the medium for preparing these compositions contains in addition a compound C/ consisting of a triallyl isocyanurate or a diphenyldiethoxysilane di(meth)acrylate of general formula:

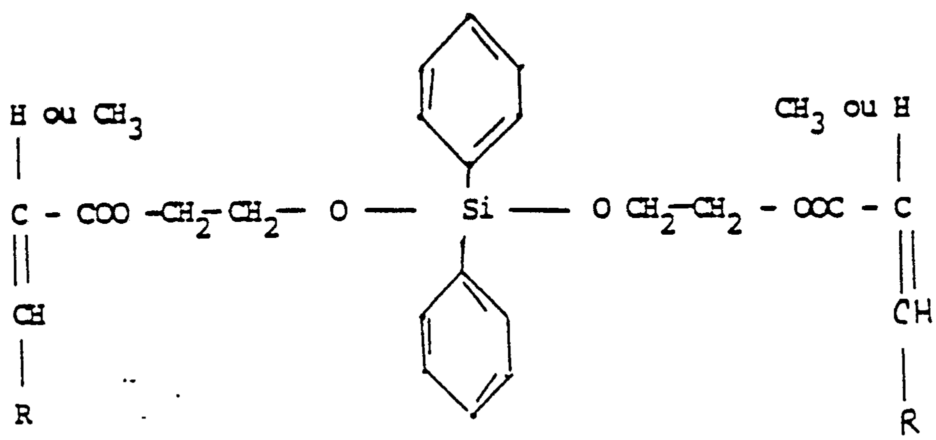

(4)

R being a hydrogen atom, or a methyl or ethyl radical, and.

compound C/ represents from 10 to 20 % by weight of the total composition and compound B/ represents from 0.05 to 3 % by weight of the total composition.

2. Compositions according to Claim 1, characterized in that the bisimide of formula (1) is N,N'-4,4'-diphenylmethanebismaleimide and/or N,N'-2,4-tolylenebismaleimide.

3. Compositions according to Claim 1, characterized in that the compound b) is Diphenylsilanediol

4. Compositions according to Claim 1, characterized in that the prepolymer A consists of 60 to 90 % by weight of reactant containing maleimide groups and 10 to 40 % by weight of organosilicon compound.

5. Process for preparing a composition according to Claim 1 characterized in that an intimate mixture of the reactant containing maleimide groups and of the hydroxylated organosilicon compound is prepared, the mixture is melted at a temperature which is at most equal to the melting temperature of the maleimide which is the most difficult to liquefy, then the imidazole derivative, previously dissolved in a diluent, is added with

vigorous stirring, then a quick degassing is carried out and finally triallyl isocyanurate or diphenyldiethoxysilane di(meth)acrylate is added and the resin is cast immediately after homogenization.

6. Process according to Claim 5, characterized in that before the reactant containing maleimide groups and the hydroxylated organosilicon compound are intimately mixed, the latter product is heated at approximately 150° C until at least 40 % of the initial hydroxyl groups have disappeared.

7. Process according to Claim 5, characterized in that the imidazole compound is dissolved in triallyl isocyanurate.

8. Shaped products obtained from compositions according to Claims 1 to 4.